# EUROPÄISCHE PATENTSCHRIFT

(11) **EP 2 146 855 B1**
(45) Veröffentlichungstag und Bekanntmachung des Hinweises auf die Patenterteilung: **25.01.2012**
(21) Anmeldenummer: 08736278.6
(22) Anmeldetag: 16.04.2008
(51) Int. Cl.: B60K 6/387, F16D 25/12, F16D 1/076

(54) **HYBRIDANTRIEBSSYSTEM FÜR EIN FAHRZEUG**
HYBRID DRIVE SYSTEM FOR A VEHICLE
SYSTÈME DE PROPULSION HYBRIDE POUR UN VÉHICULE

(30) Priorität: 24.05.2007 DE 102007024126
(43) Veröffentlichungstag der Anmeldung: 27.01.2010
(73) Patentinhaber: ZF Friedrichshafen AG, 88038 Friedrichshafen (DE)
(72) Erfinder: KLEUKER, Christoph, 97422 Schweinfurt (DE); SCHMITT, Guido, 97714 Oerlenbach-Eltingshausen (DE); MATSCHAS, Steffen, 97469 Gochsheim (DE); BARTHA, Alexander, 97082 Würzburg (DE)
(86) Internationale Anmeldenummer: PCT/EP2008/054603
(87) Internationale Veröffentlichungsnummer: WO 2008/141876

(56) Entgegenhaltungen:
- DE-A1-102005 040 771
- DE-C1- 10 154 147
- US-A1- 2004 079 606
- US-A1- 2007 007 059
- SCHULZ-ANDRES H: "DER EINSATZ VON MODULKUPPLUNGEN IN ZUKUNFTIGEN PERSONENKRAFTWAGEN. ÖTHE USE OF MODULAR CLUTCHES IN FUTURE PASSENGER CARS" MTZ MOTORTECHNISCHE ZEITSCHRIFT, VIEWEG VERLAG, WIESBADEN, DE, Bd. 55, Nr. 9, 1. September 1994 (1994-09-01), Seite 488,490/491, XP000461873 ISSN: 0024-8525

## Beschreibung

### Technisches Gebiet

Die vorliegende Erfindung betrifft ein Hybridantriebssystem für ein Fahrzeug gemäß dem Oberbegriff von Patentanspruch 1.

### Stand der Technik

Bei derartigen, beispielsweise aus der DE 101 54 147 C1, der DE 10 2005 040 771 A1 oder der US 2007/0007059 A1 bekannten Hybridantriebssystemen besteht grundsätzlich die Anforderung, dass diese oder Teilbereiche derselben als Module bzw. Teilmodule in einen Antriebsstrang einzugliedern sind bzw. mit anderen Systembereichen eines Antriebsstrangs, wie z.B. einem als Brennkraftmaschine o.dgl. ausgebildeten Antriebsaggregat oder einem Getriebe, zu vormontierten Einheiten zusammengefasst werden sollen. Dies macht es erforderlich, die verschiedenen Bestandteile eines derartigen Hybridantriebssystems so auszugestalten bzw. so miteinander zu koppeln, dass einerseits die in einem Antriebsstrang auftretenden bzw. in Richtung der Antriebsräder zu übertragenden Drehmomente zuverlässig übertragen werden können, dass andererseits jedoch auch der vorhandene Bauraum sowohl in axialer Richtung als auch in radialer Richtung optimal ausgenutzt werden kann.

### Darstellung der Erfindung

Um dieser Anforderung gerecht zu werden, schlägt die vorliegende Erfindung ein gattungsgemäßes Hybridantriebssystem für ein Fahrzeug vor, welches zusätzlich die kennzeichnenden Merkmale von Patentanspruch 1 aufweist.

Demgemäß umfasst die Kupplungsanordnung ein Gehäuse und ein kupplungsseitiger Teil der Hirthverzahnung oder der Steckverbindung ist an einem Gehäusenabenbereich ausgebildet. Durch das Vorsehen eines Teils der Hirthverzahnung oder einer Steckverbindung an einem Gehäusenabenbereich wird es möglich, diesen Gehäusenabenbereich für sich alleine mit der gewünschten Geometrie bereitzustellen bzw. die erforderlichen Bearbeitungsmaßnahmen vorzunehmen, ohne damit den verbleibenden Teil des Gehäuses zu beeinflussen. Der Einsatz einer Hirthverzahnung zur Verbindung der Sekundärseite der Torsionsschwingungsdämpferanordnung mit dem Eingangsbereich der Kupplungsanordnung führt insbesondere hinsichtlich der Bauraumausnutzung und der zuverlässigen Drehmomentübertragung zu einer besonders vorteilhaften Ausgestaltung. Dies hat auch Auswirkungen auf die unmittelbar an diese Hirthverzahnung angrenzenden Systembereiche, also die Torsionsschwingungsdämpferanordnung und die Kupplungsanordnung, wo, resultierend aus dem Vorsehen einer Hirthverzahnung, besonders vorteilhafte Ausgestaltungsvarianten ergriffen werden können.

Der Einsatz einer Steckverbindung mit Relativaxialverschiebbarkeit ermöglicht es, in einfacher Art und Weise die Torsionsschwingungsdämpferanordnung einerseits und die Kupplungsanordnung mit der Elektromaschine andererseits als Teilmodule auszugestalten, diese mit anderen Bereichen des Antriebsstrangs, insbesondere einem Antriebsaggregat und einem Getriebe, vorzumontieren und erst dann, wenn ein Zusammensetzen des Antriebsstrangs erfolgt, durch die ermöglichte Relativaxialverschiebbarkeit innerhalb der Steckverbindung zur Drehmomentübertragung zusammenzufügen. Es sei hier darauf hingewiesen, dass im Sinne der vorliegenden Erfindung diese Relativaxialverschiebbarkeit bedeutet, dass die durch die Steckverbindung in Kontakt gebrachten und zur Drehmomentübertragung miteinander gekoppelten Bauteile zwar durch Formschlusswirkung in Umfangsrichtung Drehmomente übertragen können, gleichwohl jedoch insbesondere beim Zusammenfügen des Antriebsstrangs axial bezüglich einander verschiebbar sind und auch im zusammengefügten Antriebsstrang zumindest eine geringfügige Axialrelativverschiebbarkeit aufweisen, beispielsweise um Axialvibrationen zu dämpfen.

Bei einer Ausgestaltungsvariante kann vorgesehen sein, dass ein den sekundärseitigen Teil der Hirthverzahnung aufweisendes Teil der Sekundärseite und ein den kupplungsseitigen Teil der Hirthverzahnung aufweisendes Teil der Kupplungsanordnung durch eine Mehrzahl von im radialen Bereich der Hirthverzahnung angeordneten Schraubbolzen miteinander verbunden sind. Das Vorsehen derartiger Schraubbolzen, die dann im vorgegebenen Umfangsabstand zueinander liegen, ermöglicht es beispielsweise, dass in dem Gehäusenabenbereich zwischen den Schraubbolzen Strömungskanäle für in die oder/und aus der Kupplungsanordnung zu leitendes Fluid vorgesehen sind. Dies führt zu einer axial besonders kompakten Bauform, da in den axialen Bereichen, in welchen durch die Schraubbolzen auch der feste Zusammenhalt der beiden Teile mit der Hirthverzahnung gewährleistet wird, gleichzeitig auch die Strömungskanäle bereitgestellt werden können.

Um sowohl die aus einer Hirthverzahnung, als auch aus einer Steckverbindung mit Relativaxialverschiebbarkeit resultierenden Vorteile kombinieren zu können, wird vorgeschlagen, dass ein den sekundärseitigen Teil der Hirthverzahnung aufweisendes Teil mit einem Teil der Sekundärseite durch wenigstens eine Steckverbindung mit Relativaxialverschiebbarkeit gekoppelt ist. Damit wird es insbesondere möglich, die Steckverbindung in einen radial weiter außen liegenden Bereich zu verlagern, so dass insbesondere beim Aufgliedern in Teilmodule der Zugang zu anderen Systembereichen besser ermöglicht ist und weiterhin durch den größeren Durchmesser der Steckverbindung die zu übertragenden Drehmomente von dieser auch besser aufgenommen werden können.

Ein mit dem Nabenbereich verbundenes Teil des Gehäuses kann einen Außenlamellenträger der Kupplungsanordnung bilden. Auch dieser kann dann losgelöst von dem Nabenbereich für sich alleine bearbeitet und erst dann, wenn sowohl dieses Teil des Gehäuses als auch der Nabenbereich fertig bearbeitet sind, beispielsweise durch Verschweißung mit diesem zusammengefügt werden.

Um vor allem im radial inneren Bereich einen dichten Abschluss des Gehäuses der Kupplungsanordnung erzeugen zu können, wird vorgeschlagen, dass in einem zentralen Bereich des Nabenbereichs ein einen Innenraum des Gehäuses abschließendes Verschlusselement angeordnet ist. Bei einer für die Montage des Systems besonders vorteilhaften Variante wird vorgeschlagen, dass die Schraubbolzen radial innerhalb der Abstützung der Primärseite bezüglich des Antriebsorgans oder/und radial innerhalb eines die Kupplungsanordnung bezüglich einer feststehenden Baugruppe radial oder/und axial abstützenden Stützlagers oder/und radial innerhalb eines radialen Bereichs angeordnet sind, in welchem die Primärseite oder eine die Primärseite mit dem Antriebsorgan koppelnde Baugruppe an dem Antriebsorgan festgelegt ist.

Um das erfindungsgemäße System in definierter Positionierung zu halten und axiale und radiale Ausweichbewegungen vor allem bei Einwirkung äußerer Kräfte bzw. im Rotationszustand zu vermeiden, wird vorgeschlagen, dass ein Stützlager die Kupplungsanordnung bezüglich einer feststehenden Baugruppe axial und radial abstützt, wobei das Stützlager in einer ersten axialen Richtung an der Kupplungsanordnung fest abgestützt ist und in einer zweiten axialen Richtung an der Sekundärseite der Torsionsschwingungsdämpferanordnung über ein Axialvorspannelement abgestützt ist.

Bei einer hinsichtlich der festen Verbindung der Teile der Hirthverzahnung aufweisenden Bauteile alternativen Ausgestaltungsvariante wird vorgeschlagen, dass das den sekundärseitigen Teil der Hirthverzahnung aufweisende Teil der Sekundärseite mit dem den kupplungsseitigen Teil der Hirthverzahnung aufweisenden Teil der Kupplungsanordnung durch eine Zentralverschraubung in Kämmeingriff gehalten ist.

Dabei kann beispielsweise vorgesehen sein, dass ein Zentralschraubelement ein sich an dem Teil der Sekundärseite abstützendes erstes Beaufschlagungselement und ein sich an dem Teil der Kupplungsanordnung abstützendes zweites Beaufschlagungselement in Richtung aufeinander zu presst.

Die bei dem erfindungsgemäßen Hybridantriebssystem eingesetzte Kupplungsanordnung kann eine nasslaufende Lamellenkupplung sein, bei welcher durch die Bereitstellung einer vergleichsweise großen Gesamtkupplungsreibfläche sehr große Drehmomente zuverlässig übertragen werden können, gleichzeitig jedoch nur begrenzter radialer Bauraum erforderlich ist.

Diese vergleichsweise kompakte radiale Bauweise kann erfindungsgemäß weiter dazu genutzt werden, die Elektromaschine die Kupplungsanordnung radial außen umgebend anzuordnen.

### Kurze Beschreibung der Zeichnungen

Die vorliegende Erfindung wird nachfolgend mit Bezug auf die beiliegenden Figuren detailliert beschrieben. Es zeigt:
- Fig. 1: eine Teil-Längsschnitt eines Hybridantriebssystems;
- Fig. 2: eine der Fig. 1 entsprechende Ansicht eines alternativ ausgestalteten Hybridantriebssystems;
- Fig. 3: eine der Fig. 1 entsprechende Ansicht eines alternativ ausgestalteten Hybridantriebssystems;
- Fig. 4: eine vergrößerte Ansicht eines Details des Hybridantriebssystems der Fig. 3;
- Fig. 5: eine der Fig. 1 entsprechende Ansicht eines alternativ ausgestalteten Hybridantriebssystems;
- Fig. 6: eine der Fig. 1 entsprechende Ansicht eines alternativ ausgestalteten Hybridantriebssystems;
- Fig.7: eine der Fig. 1 entsprechende Ansicht eines alternativ ausgestalteten Hybridantriebssystems;
- Fig.8: eine der Fig. 1 entsprechende Ansicht eines alternativ ausgestalteten Hybridantriebssystems.

### Bester Weg zur Ausführung der Erfindung

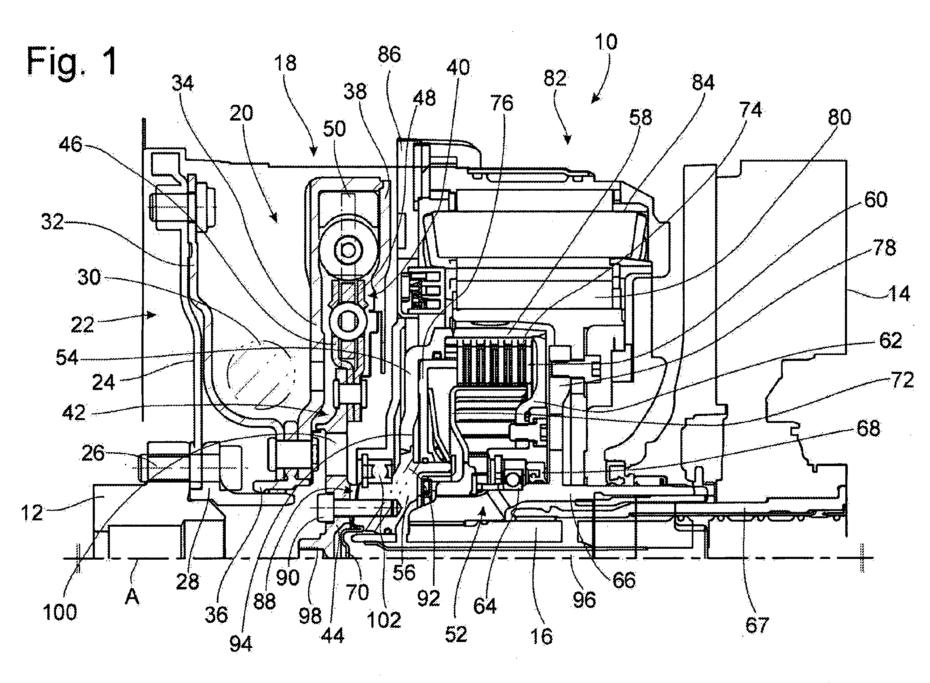

Die Fig. 1 zeigt ein allgemein mit 10 bezeichnetes Hybridantriebssystem, welches dazu dient, ein Drehmoment zwischen einer Antriebswelle 12, beispielsweise einer

Kurbelwelle einer Brennkraftmaschine, und einem Getriebe 14 bzw. einer Getriebeeingangswelle 16 eines derartigen Getriebes zu übertragen bzw. auch ein Antriebsdrehmoment zu erzeugen. Es sei hier darauf hingewiesen, dass die Drehmomentübertragung selbstverständlich auch zwischen anderen Systembereichen erfolgen kann. Insbesondere kann dem Getriebe ein hydrodynamischer Drehmomentwandler oder eine ähnliche Baugruppe vorgeschaltet sein, welche dann das Drehmoment aufnimmt.

Das Hybridantriebssystem 10 umfasst eine Torsionsschwingungsdämpferanordnung 18 mit einer Primärseite 20. Diese ist über eine Kopplungsbaugruppe 22 mit der Antriebswelle 12 zur gemeinsamen Drehung um eine Drehachse A gekoppelt. Die Kopplungsbaugruppe 20 umfasst dabei ein flexibles, plattenartiges Element 24, das radial innen durch eine Mehrzahl von Schraubbolzen 26 zusammen mit einem Zentrierelement 28 für die Primärseite 20 an die Antriebswelle 12 angeschraubt ist. Radial außen ist dieses plattenartige Element 24 mit einem eine Radantriebswelle 30 o.dgl. axial überbrückenden Kopplungselement 32 beispielsweise durch Vernietung oder Verschraubung fest verbunden, welches radial innen mit einem Deckscheibenelement 34 der Primärseite 20 fest verbunden ist. Im Bereich dieser Verbindung ist auch ein auf dem Zentrierelement 28 radial zentriertes Gegenzentrierelement 36 der Primärseite 20 fest angebunden. Ein zweites Deckscheibenelement 38 begrenzt zusammen mit dem ersten Deckscheibenelement 34 einen Raumbereich, in welchem eine Dämpferfederanordnung 40 angeordnet ist. Diese im dargestellten Falle zweistufig wirkende Dämpferfederanordnung 40 dient dazu, ein Drehmoment zwischen der Primärseite, also insbesondere den Deckscheibenelementen 34, 38 derselben, und einer Sekundärseite 42 zu übertragen, die im dargestellten Falle im Wesentlichen ein scheibenartiges Bauteil 44 umfasst, mit welchem Deckscheibenelemente 46, 48 fest verbunden sind. Zwischen diese greift ein Zentralscheibenelement 50 ein, das in Umfangsrichtung sowohl an den Dämpferfedern der radial äußeren Dämpferstufe als auch an den Dämpferfedern der radial inneren Dämpferstufe abgestützt ist und somit eine Drehmomentübertragungskopplung zwischen diesen beiden auch seriell wirksamen Dämpferstufen herstellt.

Es sei hier darauf hingewiesen, dass selbstverständlich die Torsionsschwingungsdämpferanordnung 18 auch mit nur einer Dämpferstufe ausgebildet sein kann bzw. die Dämpferstufen oder eine Dämpferstufe ineinander gestaffelte Federn aufweisen können.

Auf die Sekundärseite 42 der Torsionsschwingungsdämpferanordnung 18 folgt im Drehmomentenfluss eine als nasslaufende Lamellenkupplung ausgebildete Kupplungsanordnung 52. Diese umfasst ein Gehäuse 54 mit einem radial inneren Teil 56, das einen Nabenbereich bereitstellt, und einem radial äußeren Teil 58, das einen Außenlamellenträger für eine Mehrzahl von damit drehfest, jedoch in Richtung der Drehachse A auf verschiebbar gekoppelten Außenlamellen 60 bildet. Die beiden Teile 56, 58 sind in ihrem Angrenzungsbereich durch Verschweißung fest verbunden. Über eine Gehäusedeckelanordnung 62, die vermittels eines Lagers 64 auf einem Zwischenabtriebselement 66 drehbar gelagert ist und durch ein Dichtelement 68 bezüglich dieses Zwischenabtriebselements 66 fluiddicht abgeschlossen ist, ist der Innenraum des Gehäuses 54 an der von der Torsionsschwingungsdämpferanordnung 18 abgewandten Seite abgeschlossen. An der der Torsionsschwingungsdämpferanordnung 18 zugewandten axialen Seite ist der zentrale Bereich des als Nabenbereich dienenden Teils 56 durch eine Verschlusskappe 70 fluiddicht abgeschlossen.

Im inneren des Gehäuses 54 ist ein Innenlamellenträger 72 vorgesehen, mit welchem eine Mehrzahl von in Richtung der Drehachse A verlagerbaren Innenlamellen 74 drehfest gekoppelt ist. Durch einen im Inneren des Gehäuses 54 angeordneten Kolben 76 können die Außenlamellen 60 und die Innenlamellen 74 gegeneinander gepresst werden, um somit zwischen dem Außenlamellenträger, d.h. dem Gehäuseteil 58, und dem Innenlamellenträger 72 ein Drehmoment zu übertragen.

Der Innenlamellenträger 72 ist auf dem Zwischenabtriebselement 66 drehfest getragen, beispielsweise durch eine durch axiales Einstecken des Zwischenabtriebselements 66 in Eingriff bringbare Verzahnung. Das Zwischenabtriebselement 66 wiederum ist in Drehkopplungseingriff mit der Getriebeeingangswelle 16, so dass über die Torsionsschwingungsdämpferanordnung 18, die Kupplungsanordnung 52 und das Zwischenabtriebselement 66 ein Antriebsdrehmoment von der Antriebswelle 12 auf die Getriebeeingangswelle 16 übertragen werden kann. Es sei darauf hingewiesen, dass selbstverständlich in den auch die Außenlamellen 60 und die Innenlamellen 74 enthaltenden Raumbereich des Gehäuses 44 Fluid eingeleitet und von diesem Raumbereich wieder abgezogen werden kann, insbesondere um im Schlupfbetrieb entstehende Wärme aus dem Bereich der reibend aneinander sich bewegenden Lamellen abzuführen. Hiezu können beispielsweise in dem Zwischenabtriebselement 66, der Getriebeeingangswelle 16 und einer Hohl- oder Stützwelle 67 Kanäle bzw. Öffnungen zur Zuleitung bzw. Ableitung eines Fluids, beispielsweise eines Öls vorgesehen sein.

An einem nach radial außen greifenden und axial unmittelbar auf das Gehäuse 54 der Kupplungsanordnung 52 folgenden Verbindungsbereich 78 des Zwischenabtriebselements 66 ist eine Rotoranordnung 80 einer allgemein mit 82 bezeichneten Elektromaschine fest getragen. D.h., dass die Rotoranordnung 80 zusammen mit dem Zwischenabtriebselement 66 und dem Innenlamellenträger 72, also dem Ausgangsbereich der Kupplungsanordnung 52, um die Drehachse A drehbar ist. Eine Statoranordnung 84 der Elektromaschine 82 ist an einer feststehenden Baugruppe, im dargestellten Beispiel einem nach radial innen greifenden scheibenartigen Stützelement 86 fest getragen. Man erkennt, dass die Elektromaschine 82 grundsätzlich so angeordnet ist, dass sie die Kupplungsanordnung 52 radial außen umgibt, so dass die axiale Erstreckung eines im Wesentlichen die Elektromaschine 82 und die Kupplungsanordnung 52 umfassenden Teilmoduls nicht wesentlich länger ist, als die axiale Erstreckung der Elektromaschine 82 selbst. Dies gewährleistet eine kompakte Bauform.

Bei Erregung der Elektromaschine 82 kann also auch durch diese ein Drehmoment bereitgestellt werden, das über das Zwischenabtriebselement 66 in die Getriebeeingangswelle 16 geleitet werden kann. Bei offener, also nicht eingerückter Kupplungsanordnung 52 kann somit ein Antrieb allein über die Elektromaschine 82 erfolgen. Bei eingerückter Kupplungsanordnung 52 kann die Elektromaschine 82 ein unterstützendes Antriebsdrehmoment liefern bzw. kann auch genutzt werden, um eine als Antriebsaggregat wirksame Brennkraftmaschine anzulassen. Selbstverständlich kann in einem Zustand, in welchem eine Brennkraftmaschine oder ein sonstiges Antriebsaggregat das Antriebsdrehmoment liefert, die Elektromaschine 82 auch als Generator genutzt werden.

Die Verbindung der Torsionsschwingungsdämpferanordnung 18 bzw. des Scheibenteils 44 der Sekundärseite 42 derselben mit der Kupplungsanordnung 52, also dem im Wesentlichen den Eingangsbereich derselben darstellenden Gehäuse 54, erfolgt über eine Hirthverzahnung 88. Ein sekundärseitiger Teil dieser Hirthverzahnung 88 ist am Scheibenteil 44 der Sekundärseite 42 vorgesehen. Ein kupplungsseitiger Teil dieser Hirthverzahnung 88 ist am Teil 56 des Gehäuses 54, also am Nabenbereich des Gehäuses 54 vorgesehen. Die Hirthverzahnung 88 ist so ausgebildet, dass sie sich ringartig um die Drehachse A herum erstreckt. Durch eine Mehrzahl von im radialen Bereich dieser Hirthverzahnung 88 liegenden Schraubbolzen 90, die in Umfangsrichtung in vorbestimmtem Abstand zueinander liegen, sind die beiden Teile der Hirthverzahnung, also auch das Scheibenteil 44 und das Teil 56 des Gehäuses 54 in festem Verbund gehalten.

In Umfangsrichtung zwischen den Schraubbolzen 90 bzw. den dafür vorgesehenen Gewindebohrungen im Teil 56 des Gehäuses 54, also im Nabenbereich des Gehäuses 54, sind in der Fig. 1 mit gestrichelter Linie angedeutete Kanäle 92 bzw. zumindest ein derartiger Kanal 92 vorgesehen. Dieser bzw. diese Kanäle 92 stellen eine Verbindung her zwischen einem Innenvolumenbereich 94 im Gehäuse 54 und einer in der Getriebeeingangswelle 16 ausgebildeten zentralen Bohrung oder Öffnung 96. Auf diese Art und Weise wird es möglich, Fluid einzuleiten bzw. abzuleiten und somit den Fluiddruck zu verändern, welcher den Kolben 76 beaufschlagen kann und auf diese Art und Weise zur Herstellung des Reibeingriffs zwischen den Außenlamellen 60 und den Innenlamellen 74 führen kann. Auch dies ist eine Platz sparende Anordnung, da im selben axialen Bereich, in welchem die Schraubbolzen 90 liegen, auch der bzw. die Kanäle 92 angeordnet sein können. Da durch die Verschlusskappe 70 der zentrale Bereich des Teils 56 gegen Fluidaustritt in axialer Richtung abgeschlossen ist, wird gleichzeitig eine Fluidleckage durch die Hirthverzahnung 94 hindurch vermieden.

Man erkennt, dass das Scheibenteil 44 der Sekundärseite 42 in seinem zentralen Bereich eine beispielsweise als Innensechskant o.dgl. ausgebildete Werkzeugangriffsformation 98 aufweist. Diese kann dazu genutzt werden, beim Anziehen der Schraubbolzen 90 ein Abstützmoment zu erzeugen bzw. bei Ausgestaltung beispielsweise mit Innengewinde ein Montagewerkzeug einzuschrauben, über welches das gesamte insbesondere die Kupplungsanordnung 52 und die Elektromaschine 82 umfassende Teilmodul in Montageposition gebracht werden kann.

Man erkennt in dem Scheibenteil 44 der Sekundärseite 42 ferner Durchgriffsöffnungen 100, welche es gestatten, bei der Montage Zugriff auf die Nietbolzen zu nehmen, welche eine Verbindung zwischen dem Deckscheibenelement 34, dem Gegenzentrierelement 36 und dem Überbrückungselement 32 herstellen.

Durch die Ausgestaltung der Verbindung der beiden Teile 44 und 56 als Hirthverzahnung 88 entstehen insbesondere in Kombination damit, dass diese beiden Teile durch eine Mehrzahl von in Umfangsrichtung um die Drehachse A verteilt liegenden Schraubbolzen 90 zusammengehalten sind, verschiedene Vorteile. Zunächst kann der zentrale Bereich des Scheibenteils 44 frei gehalten werden, um dort die Werkzeugangriffsformation 98, ein Innengewinde für ein Montagewerkzeug oder dergleichen bereitzustellen. Gleichzeitig gestattet es diese Anordnung, die bereits angesprochenen Kanäle 92 in dem Nabenbereich bzw. dem Teil 56 des Gehäuses 54 unterzubringen und somit ein zusätzlichen axialen Bauraum beanspruchendes Teil zu vermeiden. Weiterhin wird es möglich, für die beiden Teile 56 und 58 des Gehäuses 54 jeweils optimierte Materialien einzusetzen bzw. diese auch unabhängig voneinander zu bearbeiten, um einerseits das Teil 56 mit der Hirthverzahnung bzw. dem kupplungsseitigen Teil der Hirthverzahnung 88 vorzusehen, und anderseits das Teil 58 als Außenlamellenträger auszugestalten, wobei diese beiden Teile dann durch Verschweißung miteinander zu verbinden sind. Dabei kann beispielsweise der kupplungsseitige Teil der Hirthverzahnung durch Kaltfließpressen und ggf. Prägen hergestellt werden. Insbesondere ist die Ausgestaltung der Hirthverzahnung als so genannte Plankerbverzahnung möglich.

Weiterhin erkannt man in Fig. 1, dass die Schraubbolzen 90 in einem radialen Bereich liegen, der radial innerhalb der Zentrierung der Primärseite 20 der Torsionsschwingungsdämpferanordnung 18 bezüglich der Antriebswelle 12 liegt, also desjenigen Bereichs, in welchem das Gegenzentrierelement 36 auf dem Zentrierelement 28 radial abgestützt ist. Auch eine Positionierung der Schraubbolzen 90 radial innerhalb desjenigen Bereichs, in welchem durch die Schraubbolzen 26 die Primärseite 20 über die Kopplungsbaugruppe 22 bezüglich der Antriebswelle 12 festgelegt ist, ist realisiert. Ferner erkennt man, dass diese durch die Bolzen 90 hergestellte feste Verbindung im Bereich der Hirthverzahnung 88 auch radial innerhalb eines Bereichs liegt, in welchem das Teil 56 des Gehäuses 54 über ein Stützlager 102 an dem zwischen der Kupplungsanordnung 52 und der Torsionsschwingungsdämpferanordnung 18 nach radial innen greifenden und auch die Statoranordnung 84 der Elektromaschine 82 tragenden Stützelement 86 radial und axial abgestützt ist. Durch diese Ausgestaltung, insbesondere die Positionierung der Schraubbolzen 90 wird es also möglich, Zugriff auf verschiedene wesentliche Systembereiche zu erhalten, gleichzeitig jedoch insbesondere auch die Funktion der Abstützung des Hybridantriebssystems 10 über das Stützelement 86 realisieren zu können.

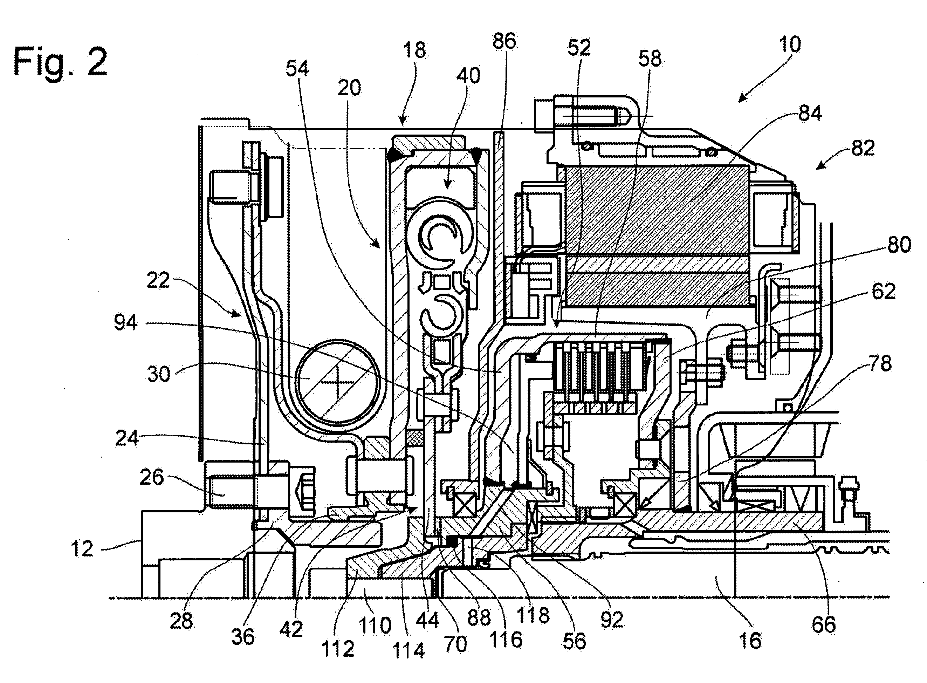

Eine abgewandelte Ausgestaltungsform eines derartigen Hybridantriebssystems 10 ist in Fig. 2 gezeigt. Hier sind Komponenten, welche vorangehend beschriebenen Komponenten hinsichtlich Aufbau bzw. hinsichtlich Funktion entsprechen, mit dem gleichen Bezugszeichen bezeichnet. Im Folgenden wird lediglich auf die wesentlichen bestehenden Unterschiede eingegangen.

Bei der in Fig. 2 gezeigten Ausgestaltungsvariante ist zwischen dem Teil 56 des Gehäuses 54, also dem den Nabenbereich bereitstellenden Teil der Kupplungsanordnung 52, und dem Scheibenteil 44 der Sekundärseite 42 der Torsionsschwingungsdämpferanordnung 18 wiederum ein Drehkopplungseingriff durch eine symbolisch angedeutete Hirthverzahnung 88 bereitgestellt, wobei der sekundärseitige Teil der Hirthverzahnung 88 radial innen am Scheibenteil 44 vorgesehen ist und der kupplungsseitige Teil der Hirthverzahnung 58 radial innen am Teil 56 vorgesehen ist. Die feste Verbindung bzw. der feste Zusammenhalt dieser beiden Teile 44 und 56 ist hier jedoch realisiert durch ein Zentralschraubelement 110. Dieses durchsetzt ein sich axial an dem Scheibenteil 44 abstützendes Beaufschlagungselement 112 und ist in eine Innengewindeöffnung an einem radial innerhalb des Teils 56 liegenden und dieses axial auch beaufschlagenden Beaufschlagungselements 114 eingeschraubt. Durch Anziehen des Zentralschraubelements 110 werden diese beiden . Beaufschlagungselemente 112, 114 in Richtung aufeinander zu gepresst, so dass auch die beiden Teile 44 und 56 unter Erzeugung bzw. Beibehalt des Kämmeingriffs der beiden Teile der Hirthverzahnung 88 gegeneinander gepresst werden. Dabei stützt sich insbesondere das Beaufschlagungselement 114 in axialer Richtung an einer entsprechenden Schulter des Teils 56, also des Nabenbereichs über ein Dichtelement 116 ab und stellt somit auch einen dichten Abschluss zwischen diesem Beaufschlagungselement 114 und dem Teil 56 her. Radial innen ist die Innengewindeöffnung in diesem Beaufschlagungselement 114 durch eine in dieses eingesetzte Verschlusskappe 70 abgeschlossen. Man erkennt weiterhin, dass in dem Nabenbereich bzw. dem Teil 56 des Gehäuses 54 wieder der bzw. die Kanäle 92 vorgesehen sind, die nunmehr über in dem Beaufschlagungselement 114 vorgesehene Kanäle bzw. zumindest einen derartigen Kanal 118 nach radial innen und somit insbesondere auch einer in der Getriebeeingangswelle 16 vorgesehenen Zentralöffnung oder einer anderen kanalartigen Öffnung zum Zuführen bzw. Abführen von Fluid zu bzw. von dem Raumbereich 94 offen sind.

Man erkennt auch bei dieser Ausgestaltungsform, dass, ebenso wie bei der vorangehend beschriebenen Ausgestaltungsform, insbesondere auf Grund der Lagerung des Nabenbereichs bzw. des Teils 56 über das Stützelement 86, keine Lagerung bzw. gegenseitige radiale bzw. axiale Abstützung zwischen Primärseite 20 und Sekundärseite 42 der Torsionsschwingungsdämpferanordnung 18 erforderlich ist. Es können lediglich Montageanschläge zum Verhindern des Überdrückens von Abdichtelementen o.dgl. vorgesehen sein.

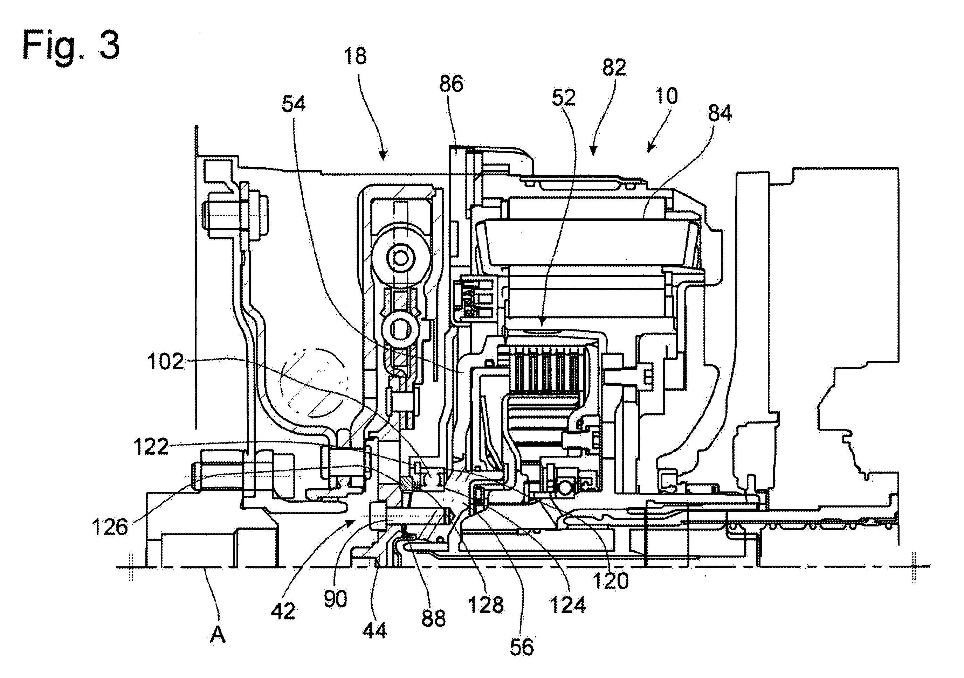

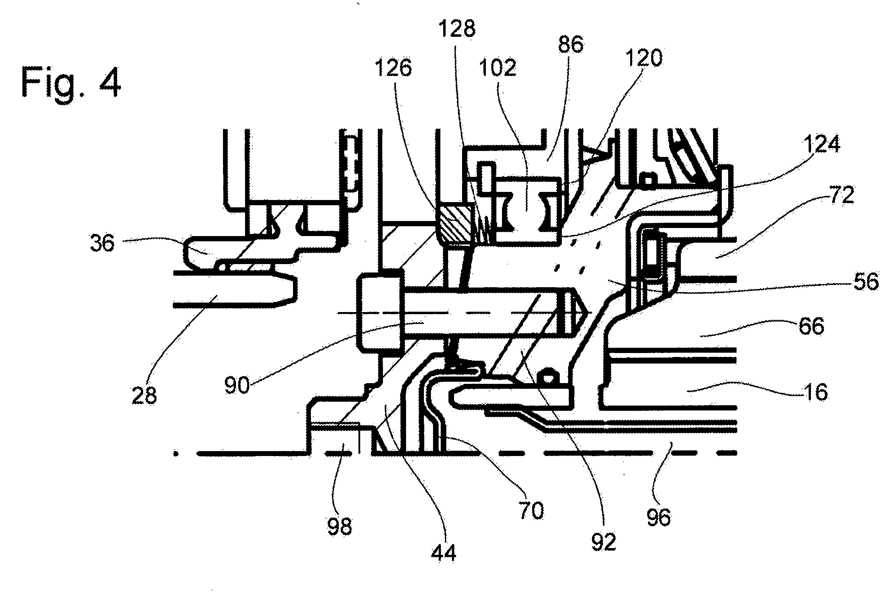

Eine weitere Abwandlung des vorangehend vor allem mit Bezug auf die Fig. 1 beschriebenen Hybridantriebssystems 10 ist in den Fig. 3 und 4 dargestellt. Man erkennt hier grundsätzlich wieder eine Anordnung, bei welcher die beiden Teile 44 und 56 durch die Hirthverzahnung 88 und die mehreren in Umfangsrichtung um die Drehachse A verteilt liegenden Schraubbolzen 90 miteinander in Drehkopplung sind bzw. gehalten sind. Man erkennt auch wieder das Stützelement 86, welches nicht nur die Statoranordnung 84 der Elektromaschine 82 trägt, sondern auch über das Stützlager 102 den Nabenbereich bzw. das Teil 56 des Gehäuses 54 der Kupplungsanordnung 52 trägt.

Während bei der Ausgestaltungsform der Fig. 1 sowohl am Stützelement 86, als auch am Teil 56 des Gehäuses 54 eine axiale Abstützung in einer Richtung durch eine jeweilige radial vorspringende Schulter und eine Axialsicherung in der anderen Richtung durch einen Sicherungsring erfolgt, sind derartige Baugruppen, also eine Radialschulter 120 und ein Sicherungsring 122 bei der in Fig. 3 gezeigten Ausgestaltungsform lediglich in Zuordnung zu dem Stützelement 86 vorgesehen, so dass das Stützlager 102 grundsätzlich definiert axial an dem Stützelement 86 gehalten ist. Das Teil 56 des Gehäuses 54 stellt ebenfalls eine Abstützschulter 124 bereit, weist jedoch keine Formation zur Zusammenwirkung mit einem Sicherungsring auf. Vielmehr ist ein hülsenartiges oder ringartiges Abstützelement 126 axial am Scheibenteil 44 der Sekundärseite 42 der Torsionsschwingungsdämpferanordnung 18 abgestützt und durch einen entsprechenden Vorsprung auch radial zentriert. Ein Federelement 128 wirkt zwischen diesem Abstützelement 126 und dem Stützlager 102 bzw. einem inneren Lagerring desselben und sorgt somit dafür, dass die die Torsionsschwingungsdämpferanordnung 18 und die Kupplungsanordnung 52 bzw. auch die Elektromaschine 82 umfassende Baugruppe ebenfalls in definierter Positionierung bezüglich des Stützelements 86 gehalten ist. Die dabei entstehenden axialen Kräfte werden von den Schraubbolzen 90 aufgenommen, welche auch die Hirthverzahnung 88 in Eingriff halten. Das Federelement 128 kann als Tellerfeder oder Wellfeder ausgebildet sein und lässt geringfügige Axialbewegungen zwischen der vorangehend angesprochenen Baugruppe und dem Stützelement 86 zu.

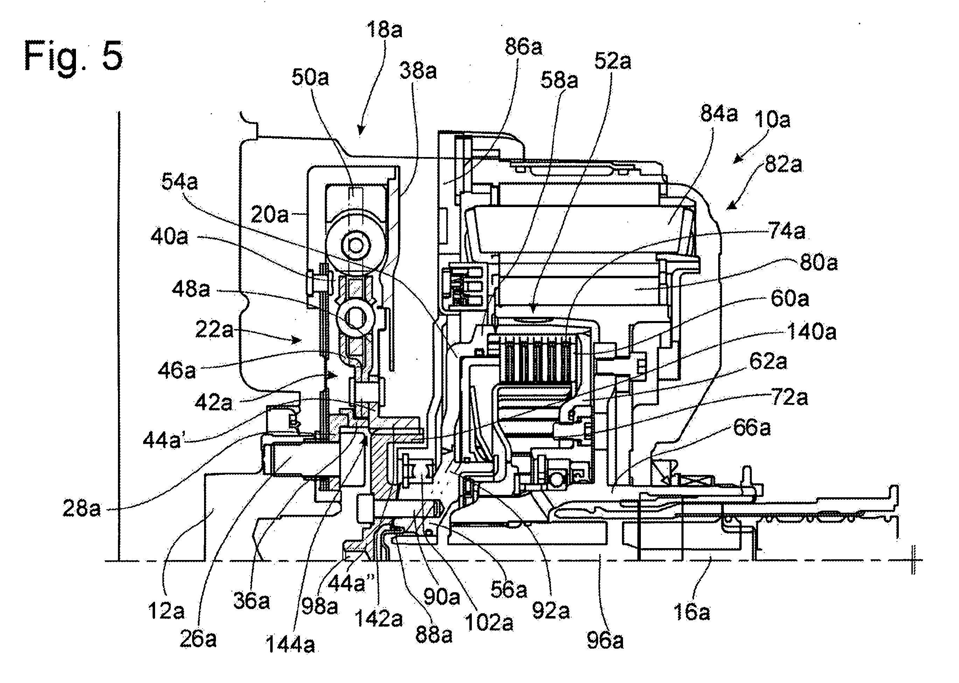

Eine weitere abgewandelte Ausgestaltungsform eines Hybridantriebssystems ist in Fig. 5 dargestellt. Komponenten, welche vorangehend beschriebenen Komponenten hinsichtlich Aufbau bzw. Funktion entsprechen, sind mit dem gleichen Bezugszeichen unter Hinzufügung eines Anhangs "a" bezeichnet.

Während hinsichtlich des Aufbaus der Kupplungsanordnung 52a und der Elektromaschine 82a im Wesentlichen Übereinstimmung mit den vorangehend beschriebenen Ausgestaltungsformen besteht und insofern auch auf die voranstehenden Ausführungen verwiesen werden kann, erkennt man, dass das scheibenartige Teil 44 der vorangehend beschriebenen Ausgestaltungsformen hier aufgegliedert ist in zwei Teile bzw. Teilbereiche 44a' und 44a". Das Teil 44a" stell den sekundärseitigen Teil der Hirthverzahnung 88 bereit und ist, so wie vorangehend auch beschrieben, durch eine Mehrzahl von Schraubbolzen 90a mit dem Teil 56a, also dem Nabenbereich, des Gehäuses 54a der Kupplungsanordnung 52a zur Drehmomentübertragung fest verbunden. Das Teil 44a" übergreift insbesondere das Stützlager 102a in radialer Richtung und weist außerhalb dieses Stützlagers 102a einen näherungsweise zylindrischen Abschnitt 140a auf. In entsprechender Weise erstreckt sich das Teil bzw. der Teilbereich 44a' ausgehend von der festen Verbindung mit den beiden Deckscheibenelementen 48a und 46a nach radial innen und weist ebenfalls einen im Wesentlichen zylindrischen Abschnitt 142a auf. In diesen beiden Abschnitten 140a und 142a sind die beiden Teile bzw. Teilbereiche 44a" und 44a' jeweils mit Teilen bzw. Teilbereichen einer Steckverbindung ausgestaltet, die nach Art einer Stirnverzahnung oder Kerbverzahnung ein axiales Ineinandereinführen und eine grundsätzliche Axialrelativverschiebbarkeit dieser beiden Teile bzw. Teilbereiche 44a' und 44a" zulässt. Über diese allgemein mit 144a bezeichnete Steckverbindung mit Relativaxialverschiebbarkeit zwischen den die Teilbereiche dieser Steckverbindung 144a aufweisenden Teilen 44a' und 44a" ist also eine Drehmomentübertragungsverbindung zwischen der Torsionsschwingungsdämpferanordnung 18a und der Kupplungsanordnung 52a realisiert, wobei im Drehmomentenfluss dann auch die Hirthverzahnung 88a liegt, die zwischen den beiden Teilen 44a' und 56a zur Drehmomentübertragung dient.

Durch diese Ausgestaltung wird das gesamte Hybridantriebssystem 10a in zwei Unterbaugruppen bzw. Teilmodule aufgegliedert. Ein erstes dieser Teilmodule umfasst im Wesentlichen die Torsionsschwingungsdämpferanordnung 18a und auch die Kopplungsbaugruppe 22a. Das andere dieser Teilmodule umfasst im Wesentlichen die Elektromaschine 82a und die damit zu einer Einheit zusammengefasste Kupplungsanordnung 52a. Beim Aufbau eines Antriebsstrangs mit einem derart gestalteten Hybridantriebssystem 10a kann also so vorgegangen werden, dass die Torsionsschwingungsdämpferanordnung 18a über die Kopplungsbaugruppe 22a an der Antriebswelle 12a festgelegt wird. Da der zylindrische Abschnitt 142a des Teils 44a' an der Sekundärseite 42a der Torsionsschwingungsdämpferanordnung radial außerhalb der Schraubbolzen 26a liegt, besteht keine Behinderung beim Festlegen des radial inneren Bereichs der hier beispielsweise axialelastisch ausgebildeten Kopplungsbaugruppe 22a an der Antriebswelle 12a. Auch das andere Teilmodul kann in einfacher Art und Weise an dem folgenden Bereich eines Antriebsstrangs, beispielsweise einem Getriebe, einem hydrodynamischen Drehmomentwandler oder dergleichen, angebracht werden, wobei insbesondere auch ohne Beeinträchtigung durch die Torsionsschwingungsdämpferanordnung 18a die Montage des Stützelements 86a bzw. auch des Stützlagers 102a erfolgen kann. Nach dieser Montage kann dann das Teil bzw. der Teilbereich 44a" durch Anbringen der Schraubbolzen 90a am Gehäuse 54a, insbesondere dem Nabenbereich desselben, festgelegt werden. Erst beim weitergehenden Zusammenfügen des Antriebsstrangs, also beispielsweise dann, wenn das Getriebe oder der Motor mit dem daran bereits vorgesehenen Teilmodul in ein Fahrzeug integriert wird, werden die beiden zylindrischen Abschnitte 140a, 142a axial ineinander eingeschoben und dabei die Steckverbindung 144a realisiert. Da in einem fertig gestellten Antriebsstrang insbesondere ein Antriebsaggregat und ein Getriebe im Allgemeinen in fester Positionierung gehalten sind, werden grundsätzlich auch keine elementaren Bewegungen mehr zwischen den beiden Teilen bzw. Teilbereichen 44a' und 44a" auftreten, was jedoch der Tatsache nicht widerspricht, dass diese beiden Teile nur durch die Steckverbindung in Drehkopplungseingriff stehen, jedoch nicht unmittelbar axial aneinander fixiert sind.

Ein wesentlicher Aspekt dieser Ausgestaltungsform ist die vorangehend beschriebene Möglichkeit, beim Aufbau eines Antriebsstrangs mit Teilmodulen zu arbeiten. Weiter besteht ein Vorteil darin, dass die Steckverbindung in einem Bereich vergleichsweise weit radial außen, insbesondere radial außerhalb der Hirthverzahnung 88a, liegt, so dass die Drehmomentenbelastung dieser Steckverbindung auf Grund des größeren Radius geringer ist.

Hinsichtlich der Ausgestaltung dieser Steckverbindung 144a, insbesondere also auch der Ausgestaltung der an den zylindrischen Abschnitten 140a und 142a ausgebildeten Teilbereiche dieser Steckverbindung 144a, können verschiedenste Variationen gewählt werden. So kann eine Keilwellenverbindung, eine Zahnwellenverbindung mit Evolventenflanken, eine Verbindung mit Kerbzahnprofil, eine Verbindung mit Polygonprofil oder eine Verbindung mit toraxähnlichem Profil ebenso gewählt werden, wie eine Verbindung mit Scheibenfeder, eine Passfederverbindung oder eine Gleitfederverbindung. Grundsätzlich kann eine derartige Steckverbindung mit jedwedem nicht rotationssymmetrischen Profil an den beiden zylindrischen Abschnitten 140a und 142a ausgebildet sein, wobei die so geformten zylindrischen Abschnitte dann mit möglichst genauer Passung ineinander einschiebbar sind, um einen Totgang bzw. ein Bewegungsspiel so weit als möglich auszuschließen.

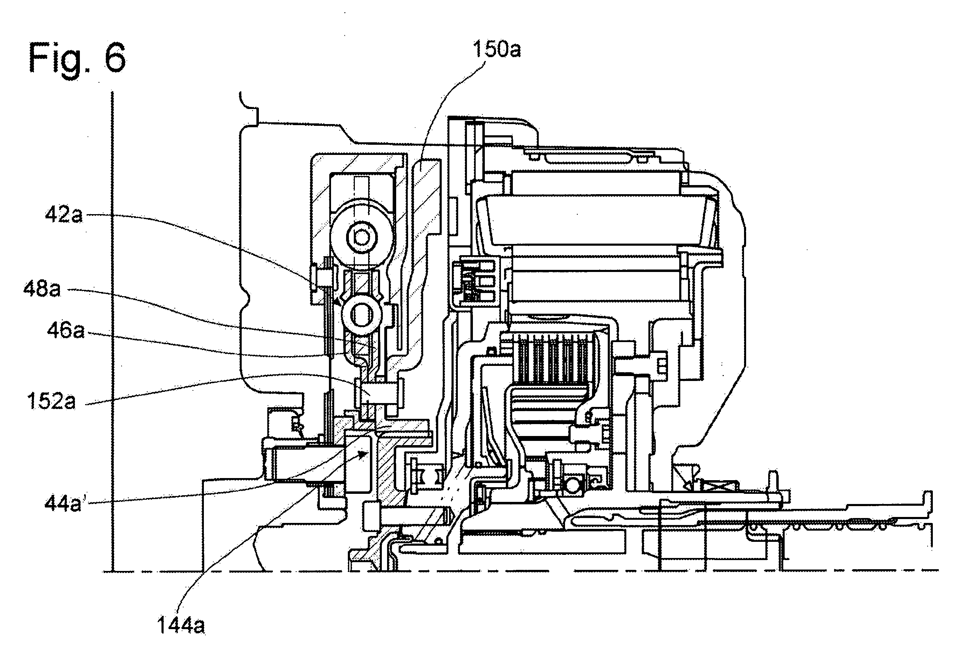

Eine abgewandelte Ausgestaltungsform hierzu ist in Fig. 6 gezeigt. Man erkennt, dass an der Sekundärseite ein zusätzliches Masseteil 150a beispielsweise mit kreisringartiger Ausgestaltung vorgesehen ist und durch die Nietbolzen 152a mit dem Teil 44a' und den beiden Deckscheibenelementen 46a und 48a der Sekundärseite 42a zu einer Baugruppe zusammengefasst ist. Der Vorteil dieses die Masse an der Sekundärseite 42a erhöhenden zusätzlichen Masseteils 150a ist, dass möglicherweise durch geringes Spiel bei Motoranregungen auftretendes Flankenanschlagen in der Steckverbindung 144a gedämpft bzw. vermieden werden kann.

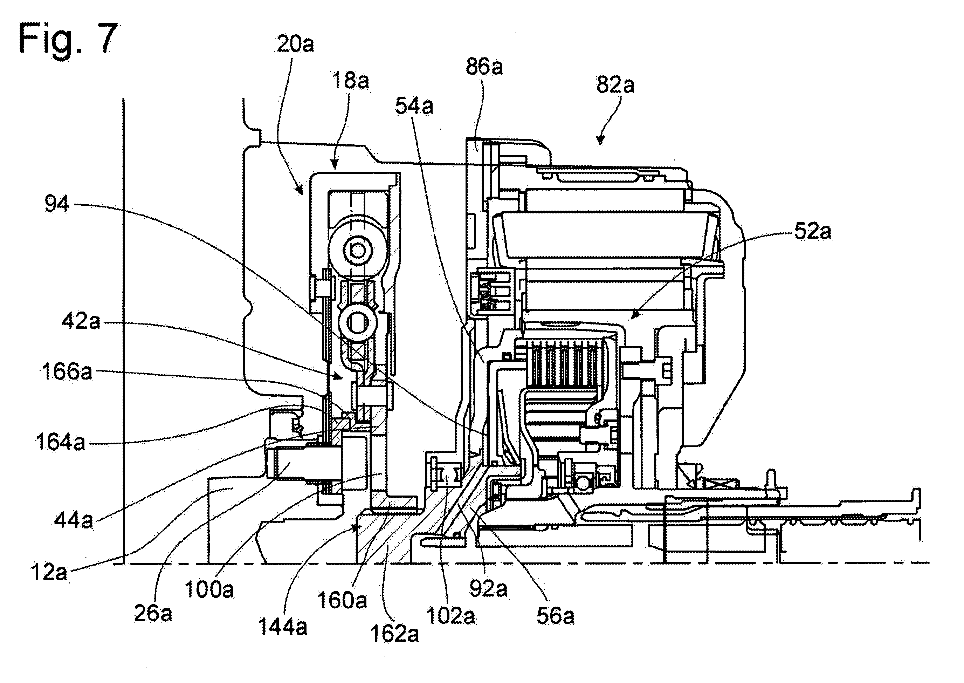

Die Fig. 7 zeigt eine Ausgestaltungsform, bei welcher die Sekundärseite 42a wieder ein in einem Teil ausgeführtes Scheibenteil 44a aufweist, das radial innen einen zylindrischen Abschnitt 160a bereitstellt. Dieser übergreift einen entsprechenden zentralen Abschnitt 162a des Teils 56a, also des Nabenbereichs des Gehäuses 54a. Der zylindrische Abschnitt 160a und der Abschnitt 162a stellen jeweils die beiden in Drehkopplungseingriff bringbaren Formationen der Steckverbindung 144a bereit, also beispielsweise Verzahnungen oder sonstige ineinander einschiebbare, also axial bezüglich einander auch bewegbare jedoch nicht rotationssymmetrische Geometrien. Im Scheibenteil 44a sind bei dieser Ausgestaltung dann wieder Durchgriffsöffnungen 100a vorgesehen, um Zugriff zu den Schraubbolzen 26a zu erhalten. An dem Teil 56a, also dem Nabenbereich des Gehäuses 54a, sind dann wieder die Kanäle 92a vorgesehen, über welche Fluid in den Raumbereich 94a geleitet werden kann bzw. von diesem Raumbereich 94a abgezogen werden kann.

Auch bei der in Fig. 7 gezeigten Ausgestaltungsform besteht der elementare Vorteil, dass die Torsionsschwingungsdämpferanordnung als Teilmodul einerseits und die Elektromaschine 82a zusammen mit der Kupplungsanordnung 52a als weiteres Teilmodul andererseits voneinander losgelöst mit einem Antriebsaggregat bzw. einem Getriebe zusammengesetzt werden können und erst dann bei Eingliederung dieser Einheiten in einen Antriebsstrang durch Herstellung der Steckverbindung 144a in Drehmomentübertragungseingriff gebracht werden.

Es ist selbstverständlich, dass auch bei der in Fig. 7 gezeigten Ausgestaltungsform an dem zentralen Abschnitt 162a des Teils 56a die beispielsweise in Fig. 1 erkennbare Werkzeugangriffsformation vorgesehen sein kann, um beispielsweise ein Montagewerkzeug einzuschrauben, das beim Zusammenfügen eines Antriebsstrangs genutzt werden kann, insbesondere um das die Elektromaschine 82a und die Kupplungsanordnung 52 umfassende Teilmodul handhaben zu können.

Man erkennt in Fig. 7 weiter, dass die Sekundärseite 42a der Torsionsschwingungsdämpferanordnung 18a bezüglich der Primärseite 20a über ein durch die Schraubbolzen 26a festgelegtes Zentrierelement 164a und ein als Lagerring o.dgl. ausgebildetes Gegenzentrierelement 166a radial zentriert ist bzw. auch axial abgestützt ist. Insbesondere auf die radiale Zentrierfunktion kann verzichtet werden, wenn sichergestellt ist, dass auch unter Ausnutzung der Abstützfunktion des Stützelements 86a und des Stützlagers 102a der Abschnitt 162a des Teils 56a des Gehäuses 54a einerseits und der zylindrische Abschnitt 160a des Teils 44a der Sekundärseite 42a andererseits in definierter Positionierung zueinander gehalten sind bzw. fluchtend zueinander angeordnet sind.

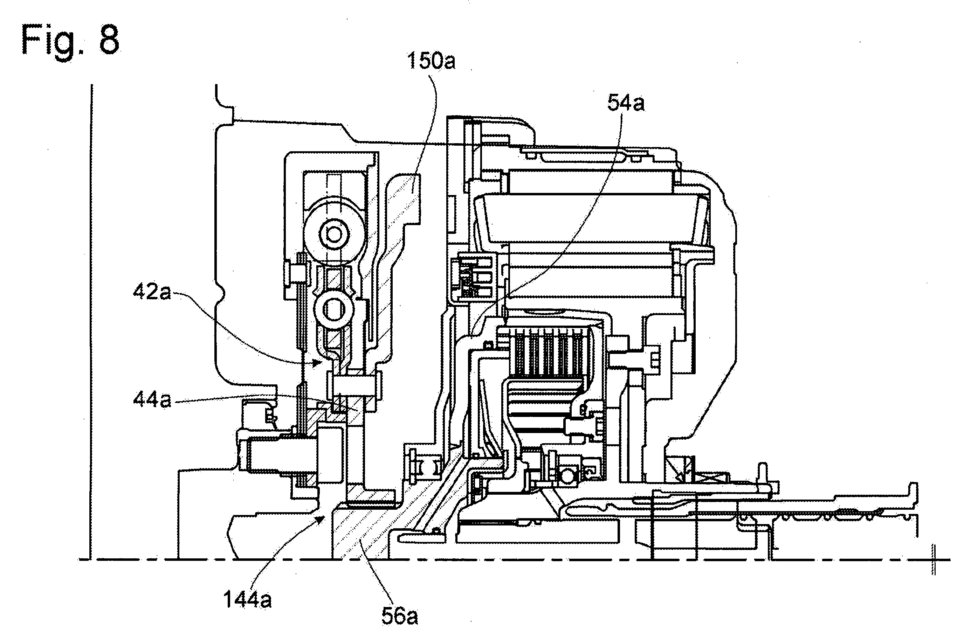

Wie die Fig. 8 weiter zeigt, kann auch bei derartiger Ausgestaltung mit einer Steckverbindung 144a zwischen dem Teil 44a der Sekundärseite 42a und dem Teil 56a des Gehäuses 44a das Vorsehen eines zusätzlichen Masseteils 150a an der Sekundärseite 42a zum Vermeiden von Anschlaggeräuschen in der Steckverbindung vorteilhaft sein.

Es sei abschließend noch einmal darauf hingewiesen, dass selbstverständlich sowohl im Bereich der Torsionsschwingungsdämpferanordnung, als auch im Bereich der Elektromaschine und im Bereich der Kupplungsanordnung verschiedenste Variationen vorgenommen werden könne, ohne von den prinzipiellen Gedanken der vorliegenden Erfindung abzuweichen. Insbesondere kann die Torsionsschwingungsdämpferanordnung auch nur mit einer Dämpferstufe ausgebildet sein, bei welcher die Dämpferfedern ein Drehmoment zwischen zwei Deckscheibenelementen und einem zwischen diesen eingreifenden Zentralscheibenelement übertragen, wobei dieses Zentralscheibenelement dann das in den Figuren beschriebene scheibenartige Teil 44 bzw. 44a ersetzt. Selbstverständlich könnte auch die Elektromaschine in anderer räumlicher Positionierung bezüglich der Kupplungsanordnung angeordnet sein. Gleichwohl ist die in den Figuren dargestellte axiale Überlappung besonders vorteilhaft, da dann sowohl die tragende Funktionalität des Stützelements für die Statoranordnung der Elektromaschine als auch die stützende Funktion für die Kupplungsanordnung und mithin auch die Rotoranordnung der Elektromaschine in einfacher Art und Weise bei sehr kompakter Baugröße realisiert werden können.

## Patentansprüche

1. Hybridantriebssystem für ein Fahrzeug, umfassend eine Torsionsschwingungsdämpferanordnung (18; 18a) mit einer mit einer Antriebswelle (12; 12a) eines Antriebsaggregats zur gemeinsamen Drehung um eine Drehachse (A) zu koppelnden Primärseite (20; 20a) und mit einer über eine Dämpferelementenanordnung (40; 40a) bezüglich der Primärseite (20; 20a) zur Drehmomentübertragung abgestützten und bezüglich der Primärseite (20; 20a) um die Drehachse (A) drehbaren Sekundärseite (42; 42a), eine Kupplungsanordnung (52; 52a) mit einem Eingangsbereich (54; 54a), welcher mit der Sekundärseite (42; 42a) zur gemeinsamen Drehung um die Drehachse (A) gekoppelt oder zu koppeln ist, und mit einem durch Reibeingriff mit dem Eingangsbereich (54; 54a) zur Drehung koppelbaren Ausgangsbereich (76, 66; 76a, 66a), eine Elektromaschine (82; 82a), wobei eine Statoranordnung (84; 84a) der Elektromaschine (82; 82a) an einer feststehenden Baugruppe (86; 86a) getragen oder zu tragen ist und eine Rotoranordnung (80; 80a) der Elektromaschine (82; 82a) mit dem Ausgangsbereich (76, 66; 76a, 66a) der Kupplungsanordnung (52; 52a) zur gemeinsamen Drehung um die Drehachse (A) gekoppelt ist, wobei der Eingangsbereich (54; 54a) der Kupplungsanordnung (52; 52a) mit der Sekundärseite (42; 42a) der Torsionsschwingungsdämpferanordnung (18; 18a) über eine Hirthverzahnung (44; 44a) oder/und eine Steckverbindung (144) mit Relativaxialverschiebbarkeit verbunden oder verbindbar ist,
**dadurch gekennzeichnet,**
**dass** die Kupplungsanordnung (52; 52a) ein Gehäuse (54; 54a) umfasst und dass ein kupplungsseitiger Teil der Hirthverzahnung (88; 88a) oder der Steckverbindung (144a) an einem Gehäusenabenbereich (56; 56a) ausgebildet ist.

2. Hybridantriebssystem nach Anspruch 1,
**dadurch gekennzeichnet, dass** ein den sekundärseitigen Teil der Hirthverzahnung (88; 88a) aufweisendes Teil der Sekundärseite (44; 44a") und ein den kupplungsseitigen Teil der Hirthverzahnung (88; 88a) aufweisendes Teil (56; 56a) der Kupplungsanordnung (52; 52a) durch eine Mehrzahl von im radialen Bereich der Hirthverzahnung (88; 88a) angeordneten Schraubbolzen (90; 90a) miteinander verbunden sind.

3. Hybridantriebssystem nach Anspruch 2,
**dadurch gekennzeichnet, dass** in dem Gehäusenabenbereich (56; 56a) zwischen den Schraubbolzen (90; 90a) Strömungskanäle (92; 92a) für in die oder/und aus der Kupplungsanordnung (52; 52a) zu leitendes Fluid vorgesehen sind.

4. Hybridantriebssystem nach einem der Ansprüche 1 bis 3,
**dadurch gekennzeichnet, dass** ein den sekundärseitigen Teil der Hirthverzahnung (88a) aufweisendes Teil (44a") mit einem Teil (44a') der Sekundärseite (42a) durch wenigstens eine Steckverbindung (144a) mit Relativaxialverschiebbarkeit gekoppelt ist.

5. Hybridantriebssystem nach einem der Ansprüche 1 bis 4,
**dadurch gekennzeichnet, dass** ein mit dem Nabenbereich (56; 56a) verbundenes Teil (58; 58a) des Gehäuses (54; 54a) einen Außenlamellenträger der Kupplungsanordnung (52; 52a) bildet.

6. Hybridantriebssystem nach einem der Ansprüche 1 bis 5,
**dadurch gekennzeichnet, dass** in einem zentralen Bereich des Nabenbereichs (56; 56a) ein einen Innenraum des Gehäuses (54; 54a) abschließendes Verschlusselement (70; 70a) angeordnet ist.

7. Hybridantriebssystem nach einem der Ansprüche 2 bis 6,
**dadurch gekennzeichnet, dass** die Schraubbolzen (90; 90a) radial innerhalb der Abstützung der Primärseite bezüglich des Antriebsorgans (12) oder/und radial innerhalb eines die Kupplungsanordnung (52; 52a) bezüglich einer feststehenden Baugruppe (86; 86a) radial oder/und axial abstützenden Stützlagers (102; 102a) oder/und radial innerhalb eines radialen Bereichs angeordnet sind, in welchem die Primärseite (20; 20a) oder eine die Primärseite mit dem Antriebsorgan (12; 12a) koppelnde Baugruppe (22; 22a) an dem Antriebsorgan (12; 12a) festgelegt ist.

8. Hybridantriebssystem nach einem der Ansprüche 1 bis 7,
**dadurch gekennzeichnet, dass** ein Stützlager (102) die Kupplungsanordnung (52) bezüglich einer feststehenden Baugruppe (86) axial und radial abstützt, wobei das Stützlager (102) in einer ersten axialen Richtung an der Kupplungsanordnung (52) fest abgestützt ist und in einer zweiten axialen Richtung an der Sekundärseite (42) der Torsionsschwingungsdämpferanordnung (18) über ein Axialvorspannelement (128) abgestützt ist.

9. Hybridantriebssystem nach einem der Ansprüche 1 bis 8,
**dadurch gekennzeichnet, dass** das den sekundärseitigen Teil der Hirthverzahnung (88) aufweisende Teil (44) der Sekundärseite (42) mit dem den kupplungsseitigen Teil der Hirthverzahnung (88) aufweisenden Teil (56) der Kupplungsanordnung (52) durch eine Zentralverschraubung in Kämmeingriff gehalten ist.

10. Hybridantriebssystem nach einem der Ansprüche 1 bis 9,
**dadurch gekennzeichnet, dass** ein Zentralschraubelement (110) ein sich an dem Teil (44) der Sekundärseite (42) abstützendes erstes Beaufschlagungselement (112) und ein sich an dem Teil (56) der Kupplungsanordnung (52) abstützendes zweites Beaufschlagungselement (114) in Richtung aufeinander zu presst.

11. Hybridantriebssystem nach einem der Ansprüche 1 bis 10,
**dadurch gekennzeichnet, dass** die Kupplungsanordnung (52) eine nasslaufende Lamellenkupplung umfasst.

12. Hybridantriebssystem nach einem der Ansprüche 1 bis 11,
**dadurch gekennzeichnet, dass** die Elektromaschine (82) die Kupplungsanordnung (52) radial außen umgebend angeordnet ist.

## Claims

1. Hybrid drive system for a vehicle, comprising a torsional vibration damper arrangement (18; 18a) having a primary side (20; 20a) which can be coupled to a drive shaft (12; 12a) of a drive unit for joint rotation about a rotation axis (A), and having a secondary side (42; 42a) which is supported with respect to the primary side (20; 20a) by means of a damper element arrangement (40; 40a) for the purpose of transmitting torque and which can be rotated with respect to the primary side (20; 20a) about the rotation axis (A), comprising a clutch arrangement (52; 52a) with an input region (54; 54a) which is coupled or can be coupled to the secondary side (42; 42a) for joint rotation about the rotation axis (A), and having an output region (76, 66; 76a, 66a) which can be coupled to the input region (54; 54a) by frictional engagement for rotation purposes, and comprising an electrical machine (82; 82a), with a stator arrangement (84; 84a) of the electrical machine (82; 82a) being fitted or being able to be fitted to a stationary assembly (86; 86a) and a rotor arrangement (80; 80a) of the electrical machine (82; 82a) being coupled to the output region (76, 66; 76a, 66a) of the clutch arrangement (52; 52a) for joint rotation about the rotation axis (A), with the input region (54; 54a) of the clutch arrangement (52; 52a) being connected or being able to be connected to the secondary side (42; 42a) of the torsional vibration damper arrangement (18;
18a) by means of a Hirth tooth system (44; 44a) or/and a plug connection (144) with relative axial displaceability, **characterized in that** the clutch arrangement (52; 52a) comprises a housing (54; 54a), and **in that** a clutch-side part of the Hirth tooth system (88; 88a) or the plug connection (144a) is formed on a housing hub region (56; 56a).

2. Hybrid drive system according to Claim 1, **characterized in that** a part of the secondary side (44; 44a''), which part comprises the secondary-side part of the Hirth tooth system (88; 88a), and a part (56; 56a) of the clutch arrangement (52; 52a), which part comprises the clutch-side part of the Hirth tooth system (88; 88a), are connected to one another by a plurality of threaded bolts (90; 90a) which are arranged in the radial region of the Hirth tooth system (88; 88a).

3. Hybrid drive system according to Claim 2, **characterized in that** flow channels (92; 92a) for fluid which can be conducted into or/and out of the clutch arrangement (52; 52a) are provided in the housing hub region (56; 56a) between the threaded bolts (90; 90a).

4. Hybrid drive system according to one of Claims 1 to 3, **characterized in that** a part (44a"), which part comprises the secondary-side part of the Hirth tooth system (88a), is coupled to a part (44a') of the secondary-side (42a) by at least one plug connection (144a) with relative axial displaceability.

5. Hybrid drive sytem according to one of Claims 1 to 4, **characterized in that** a part (58; 58a) of the housing (54; 54a), which part is connected to the hub region (56; 56a), forms an outer disc carrier of the clutch arrangement (52; 52a).

6. Hybrid drive system according to one of Claims 1 to 5, **characterized in that** a closure element (70; 70a) which closes off an interior space in the housing (54; 54a) is arranged in a central region of the hub region (56; 56a).

7. Hybrid drive system according to one of Claims 2 to 6, **characterized in that** the threaded bolts (90; 90a) are arranged radially inside the support of the primary side with respect to the drive member (12) or/and radially inside a supporting bearing (102; 102a) which provides radial or/and axial support for the clutch arrangement (52; 52a) in respect of a stationary assembly (86; 86a) or/and radially inside a radial region in which the primary side (20; 20a) or an assembly (22; 22a) which couples the primary side to the drive member (12; 12a) is fixed to the drive member (12; 12a).

8. Hybrid drive system according to one of Claims 1 to 7, **characterized in that** a supporting bearing (102) axially and radially supports the clutch arrangement (52) in respect of a stationary assembly (86), wherein the supporting bearing (102) is supported so as to be fixed to the clutch arrangement (52) in a first axial direction and is supported on the secondary side (42) of the torsional vibration damper arrangement (18) by means of an axial prestressing element (128) in a second axial direction.

9. Hybrid drive system according to one of Claims 1 to 8, **characterized in that** that part (44) of the secondary side (42) which comprises the secondary-side part of the Hirth tooth system (88) is held by a central screw connection in intermeshing engagement with that part (56) of the clutch arrangement (52) which comprises the clutch-side part of the Hirth tooth system (88).

10. Hybrid drive system according to one of Claims 1 to 9, **characterized in that** a central screw element (110) presses a first actuating element (112), which is supported on the part (44) of the secondary side (42), and a second actuating element (114), which is supported on the part (56) of the clutch arrangement (52), towards one another.

11. Hybrid drive system according to one of Claims 1 to 10, **characterized in that** the clutch arrangement (52) comprises a wet-running disc clutch.

12. Hybrid drive system according to one of Claims 1 to 11, **characterized in that** the electrical machine (82) is arranged so as to surround the clutch arrangement (52) radially on the outside.

## Revendications

1. Système d'entraînement hybride pour un véhicule, comprenant un agencement d'amortisseur d'oscillations de torsion (18 ; 18a) avec un côté primaire (20 ; 20a) à accoupler à un arbre d'entraînement (12 ; 12a) d'un groupe motopropulseur en vue de la rotation commune autour d'un axe de rotation (A) et avec un côté secondaire (42 ; 42a) supporté par le biais d'un agencement d'éléments amortisseurs (40 ; 40a) par rapport au côté primaire (20 ; 20a) en vue du transfert de couple et pouvant tourner autour de l'axe de rotation (A) par rapport au côté primaire (20 ; 20a), un agencement d'embrayage (52 ; 52a) avec une région d'entrée (54 ; 54a), qui est accouplée ou peut être accouplée au côté secondaire (42 ; 42a) en vue de la rotation commune autour de l'axe de rotation (A), et avec une région de sortie (76, 66 ; 76a, 66a) pouvant être accouplée à rotation par engagement par friction avec la région d'entrée (54 ; 54a), une machine électrique (82 ; 82a), un agencement de stator (84 ; 84a) de la machine électrique (82 ; 82a) étant porté ou pouvant être porté sur un module fixe (86 ; 86a) et un agencement de rotor (80 ; 80a) de la machine électrique (82 ; 82a) étant accouplé à la région de sortie (76, 66 ; 76a, 66a) de l'agencement d'embrayage (52 ; 52a) en vue de la rotation commune autour de l'axe de rotation (A), la région d'entrée (54 ; 54a) de l'agencement d'embrayage (52 ; 52a) étant connectée ou pouvant être connectée au côté secondaire (42 ; 42a) de l'agencement d'amortisseur d'oscillations de torsion (18 ; 18a) par le biais d'une denture Hirth (44 ; 44a) et/ou d'une connexion enfichable (144) avec une mobilité axiale relative,
**caractérisé en ce que**
l'agencement d'embrayage (52 ; 52a) comprend un boîtier (54 ; 54a) et **en ce qu'**une partie du côté de l'embrayage de la denture Hirth (88 ; 88a) ou de la connexion enfichable (144a) est réalisée sur une région de moyeu du boîtier (56 ; 56a).

2. Système d'entraînement hybride selon la revendication 1,
**caractérisé en ce qu'**une partie du côté secondaire (44 ; 44a") présentant la partie du côté secondaire de la denture Hirth (88 ; 88a) et une partie (56 ; 56a) de l'agencement d'embrayage (52 ; 52a) présentant la partie du côté de l'embrayage de la denture Hirth (88 ; 88a) sont connectées l'une à l'autre par une pluralité de boulons filetés (90 ; 90a) disposés dans la région radiale de la denture Hirth (88 ; 88a).

3. Système d'entraînement hybride selon la revendication 2,
**caractérisé en ce que** des canaux d'écoulement (92 ; 92a) pour un fluide à guider dans et/ou hors de l'agencement d'embrayage (52 ; 52a) sont prévus dans la région de moyeu du boîtier (56 ; 56a) entre les boulons filetés (90 ; 90a).

4. Système d'entraînement hybride selon l'une quelconque des revendications 1 à 3,
**caractérisé en ce qu'**une partie (44a") présentant la partie du côté secondaire de la denture Hirth (88a) est accouplée à une partie (44a') du côté secondaire (42a) par au moins une connexion enfichable (144a) avec une mobilité axiale relative.

5. Système d'entraînement hybride selon l'une quelconque des revendications 1 à 4,
**caractérisé en ce qu'**une partie (58 ; 58a) du boîtier (54 ; 54a) connectée à la région de moyeu (56 ; 56a) forme un support de disque extérieur de l'agencement d'embrayage (52 ; 52a).

6. Système d'entraînement hybride selon l'une quelconque des revendications 1 à 5,
**caractérisé en ce qu'**un élément de fermeture (70 ; 70a) fermant un espace interne du boîtier (54 ; 54a) est disposé dans une région centrale de la région du moyeu (56 ; 56a).

7. Système d'entraînement hybride selon l'une quelconque des revendications 2 à 6,
**caractérisé en ce que** les boulons filetés (90 ; 90a) sont disposés radialement à l'intérieur du support du côté primaire par rapport à l'organe d'entraînement (12) et/ou radialement à l'intérieur d'un palier d'appui (102 ; 102a) supportant radialement et/ou axialement l'agencement d'embrayage (52 ; 52a) par rapport à un module fixe (86 ; 86a) et/ou radialement à l'intérieur d'une région radiale dans laquelle le côté primaire (20 ; 20a) ou un module (22 ; 22a) accouplant le côté primaire à l'organe d'entraînement (12 ; 12a) est fixé sur l'organe d'entraînement (12 ; 12a).

8. Système d'entraînement hybride selon l'une quelconque des revendications 1 à 7,
**caractérisé en ce qu'**un palier d'appui (102) supporte axialement et radialement l'agencement d'embrayage (52) par rapport à un module fixe (86), le palier d'appui (102) étant supporté fixement dans une première direction axiale sur l'agencement d'embrayage (52) et étant supporté par le biais d'un élément de précontrainte axiale (128) dans une deuxième direction axiale sur le côté secondaire (42) de l'agencement d'amortisseur d'oscillations de torsion (18).

9. Système d'entraînement hybride selon l'une quelconque des revendications 1 à 8,
**caractérisé en ce que** la partie (44) du côté secondaire (42) présentant la partie du côté secondaire de la denture Hirth (88) est maintenue en engagement d'engrènement par un vissage central avec la partie (56) de l'agencement d'embrayage (52) présentant la partie du côté de l'embrayage de la denture Hirth (88).

10. Système d'entraînement hybride selon l'une quelconque des revendications 1 à 9,
**caractérisé en ce qu'**un élément de vissage central (110) presse l'un vers l'autre un premier élément de sollicitation (112) s'appuyant contre la partie (44) du côté secondaire (42) et un deuxième élément de sollicitation (114) s'appuyant sur la partie (56) de l'agencement d'embrayage (52).

11. Système d'entraînement hybride selon l'une quelconque des revendications 1 à 10,
**caractérisé en ce que** l'agencement d'embrayage (52) comprend un embrayage à disques humide.

12. Système d'entraînement hybride selon l'une quelconque des revendications 1 à 11,
**caractérisé en ce que** la machine électrique (82) est disposée de manière à entourer radialement à l'extérieur l'agencement d'embrayage (52).
